# EUROPEAN PATENT APPLICATION

(11) **EP 2 840 008 A1**
(43) Date of publication of application: **25.02.2015**
(21) Application number: 13181246.3
(22) Date of filing: 21.08.2013
(51) Int. Cl.: B61D 49/00

(54) **Distributed compressed air system for railway vehicle and corresponding method**

(71) Applicant: ALSTOM Transport Technologies, 92300 Levallois-Perret (FR)
(72) Inventor: Thomas, Johannes, 30989 Gehrden (DE)
(74) Representative: Tischner, Oliver

(57) **Abstract**

A compressed air system (10) for a railway vehicle, comprising a main reservoir pipe (MRP) adapted to supply compressed air to pneumatic equipment of the railway vehicle, at least two, and preferably six , compressed air generating units (12) fluidly connected to the main reservoir pipe (MRP), and a controller (16) adapted to control said compressed air generating units (12), characterised in that each compressed air generating unit (12) is adapted to supply compressed air to the main reservoir pipe (MRP).

## Description

The present invention relates to a compressed air system for a railway vehicle, comprising: a main reservoir pipe (MRP) adapted to supply compressed air to pneumatic equipment of the railway vehicle; a compressed air generating unit fluidly connected to the main reservoir pipe; and a controller and to a method of supplying compressed air to a main reservoir pipe (MRP) extending throughout a railway vehicle having at least two carriages. Such a compressed air system and method are disclosed in the textbook "Schienenfahrzeugtechnik" by Jürgen Janicki et al., 2nd edition, 2008, Bahn Fachverlag, pages 277 to 280.

This known compressed air system for railway vehicles has a main compressed air generating unit that provides compressed air to the main reservoir pipe. The main compressed air generating unit is however heavy, bulky, loud and consumes a lot of energy.

Accordingly, it is an object of the present invention to provide a compressed air system for a railway vehicle, which is lightweight, flexible and quiet.

This object is achieved by the above-mentioned compressed air system, wherein the compressed air system comprises at least one additional compressed air generating unit fluidly connected to the main reservoir pipe, wherein the controller is adapted to control said compressed air generating units, wherein each compressed air generating unit is adapted to supply compressed air to the main reservoir pipe (MRP).

By having at least two compressed air generating units that generate compressed air for the main reservoir pipe and thus the railway vehicle's pneumatic equipment, the compressed air generation task can be distributed. Hence, the generation of compressed air can be more easily adapted according to the current operational state of the railway vehicle by selectively switching the compressed air generating units on and off.

It is also an object of the present invention to provide a method of supplying compressed air to a railway vehicle, which is reliable, flexible and quiet.

This object is achieved by the above-mentioned compressed air method including a step of feeding compressed air into the main reservoir pipe (MRP) at each of said carriages.

By having one compressed air feeding point per carriage for the main reservoir pipe, the provision of compressed air is more flexible. Indeed, different feeding points can be used as a function of the railway vehicle's operational state. The supply of compressed air is also more reliable since the failure of one feeding point does not result in a complete compressed air outage.

According to preferred embodiments, the inventive system comprises one or more of the following features, taken in all technically possible combinations:
- the controller is adapted to run the compressed air generating units in a time-staggered manner;
- each compressed air generating unit includes an air dryer, preferably a single chamber air dryer;
- each compressed air generating unit is adapted to operate in a compressed air generating mode and in an air dryer regenerating mode;
- the controller is adapted to switch each compressed air generating unit into the air dryer regenerating mode at a specific regenerating time such that the regenerating time of one compressed air generating unit is different from the regenerating time of at least one other compressed air generating unit;
- one of the compressed air generating units is adapted to supply compressed air to a pantograph of the railway vehicle for raising the same; and/or
- each compressed air generating unit comprises a, preferably oil free, compressor, an electric motor for driving the compressor, a one-way valve for preventing compressed air from the main reservoir pipe from entering the compressor, and a compressed air reservoir acting as a compressed air buffer between the compressor and the main reservoir pipe.

According to preferred embodiments, the inventive method comprises one or more of the following features, taken in all technically possible combinations:
- the feeding step comprises sucking ambient air from the carriage interiors, compressing the sucked air, and feeding the compressed air into the main reservoir pipe (MRP); and/or
- the feeding of compressed air into the main reservoir pipe (MRP) at one carriage is started at a different time than the feeding of compressed air into the main reservoir pipe (MRP) at another carriage

The present invention also relates to a railway vehicle comprising the above-defined system.

According to preferred embodiments, the inventive railway vehicle comprises one or more of the following features, taken in all technically possible combinations:
- said railway vehicle comprising a plurality of carriages, each carriage being fitted with one of said compressed air generating units;
- the compressed air generating units are installed inside the carriages, preferably below the seating; and/or
- the railway vehicle further comprises a Train Control Monitoring System (TCMS), wherein said controller is part of the TCMS.

The present invention will now be explained in detail with reference to the drawings, wherein:
Figure 1 is a schematic diagram of a preferred embodiment of the inventive compressed air system; and
Figure 2 is a time chart showing the time-staggered duty cycles of the compressed air generating units of the compressed air system of Figure 1.

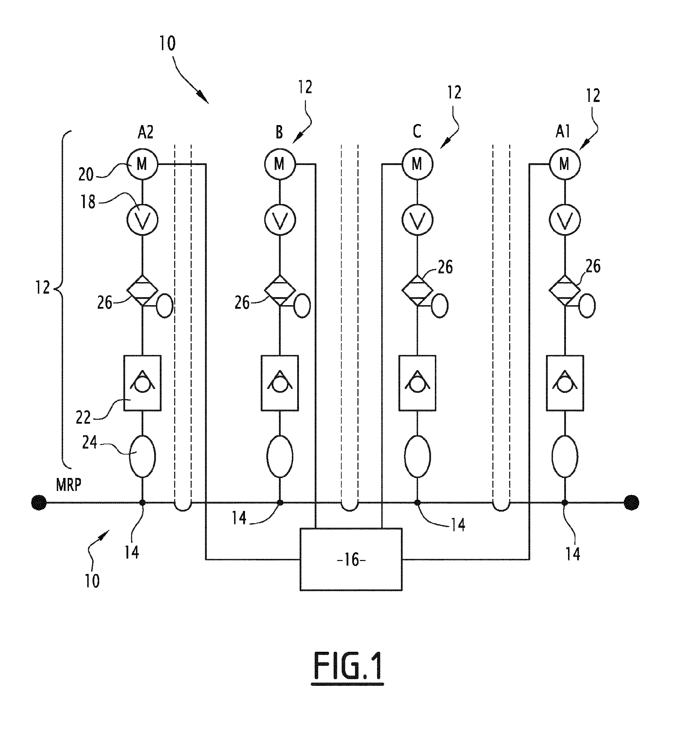

Figure 1 shows a compressed air system 10 installed on a railway vehicle with four carriages A1, A2, B and C. Compressed air system 10 comprises a main reservoir pipe MRP extending across the four carriages A1, A2, B and C. Main reservoir pipe MRP is adapted to supply compressed air to pneumatic equipment of the railway vehicle, such as pneumatically brakes system, air suspension, a pantograph, pneumatic doors, window wipers, etc.

Compressed air system 10 also includes four compressed air generating units 12 fluidly connected to the main reservoir pipe MRP. Each compressed air generating unit 12 is adapted to supply compressed air to the main reservoir pipe MRP via a corresponding compressed air feeding point 14 on main reservoir pipe MRP. Each carriage A1, A2, B and C is fitted with one of the compressed air generating units 12. In other words, there is one compressed air generating unit 12 adapted to feed compressed air into main reservoir pipe MRP per carriage. This means that compressed air generating units 12 are distributed over the railway vehicle. Preferably, each compressed air generating unit 12 is arranged inside the corresponding carriage and adapted to suck in the ambient air present in the carriage's interior in order to compress it. The compressed air generating units 12 may in particular be located below the carriages' seating.

In one embodiment, one of the compressed air generating units 12 is adapted to also supply compressed air to a pantograph of the railway vehicle for raising the same, besides supplying compressed air to the main reservoir pipe MRP. In this case, there is no more need for a separate pantograph compressor on the railway vehicle, which results in substantial cost savings.

Compressed air system 10 also comprises a controller 16 adapted to control each of the four compressed air generating units 12. Controller 16 may be integrated into the Train Control Monitoring System (TCMS) of the railway vehicle. Alternatively, controller 16 may be a separate and dedicated device for controlling the compressed air generating units 12. If the controller 16 is separate from the TCMS, compressed air system 10 remains operational even if the TCMS breaks down.

Each compressed air generating unit 12 includes a, preferably oil free, compressor 18, an electric motor 20 for driving the compressor 18, a one-way valve 22 for preventing compressed air from the main reservoir pipe MRP from entering the compressor 18, a compressed air reservoir 24 acting as a compressed air buffer between the compressor 18 and the main reservoir pipe MRP, and a, preferably single chamber, air dryer 26.

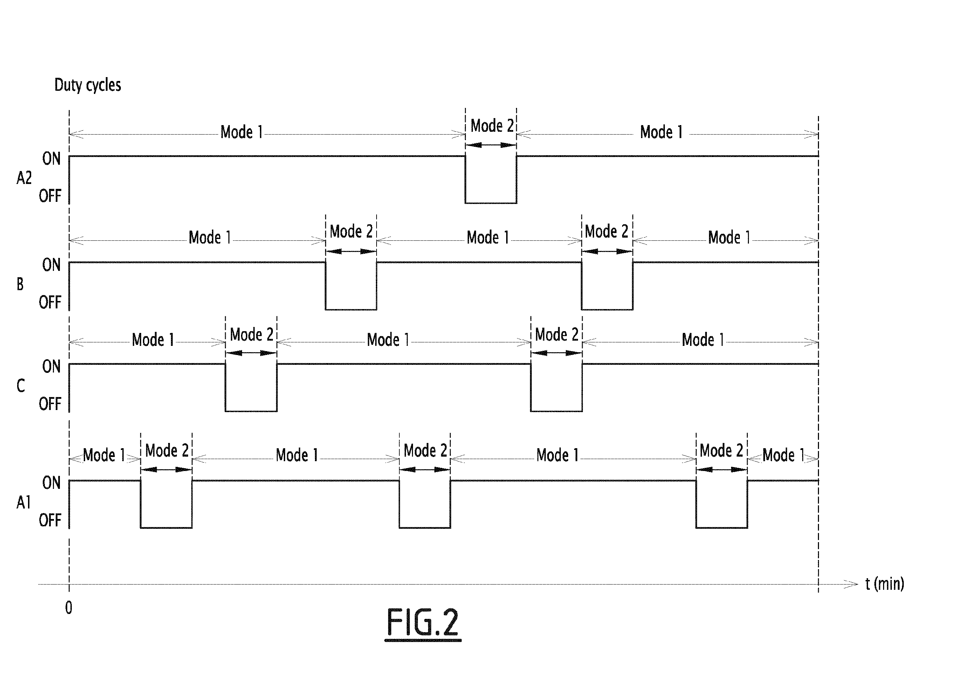

Figure 2 gives an example of how controller 16 may control the four compressed air generating units 12. Each compressed air generating unit 12 is adapted to operate in a first mode (Mode 1) where it generates compressed air and in a second mode (Mode 2) where it regenerates its air dryer 26. Air dryers 26 must be regenerated in regular intervals to function properly, i.e. the humidity captured in air dryers 26 must be evacuated before the air dryer is saturated. For example, in an embodiment, each compressed air generating unit 12 can feed the MRP continuously for a maximum time, e.g. of approximately 5 minutes (Mode 1). After that time, the respective compressed air generating unit 12 has to be stopped by the controller 16 and the respective air dyer has to be regenerated. This may correspond to a maximum duty cycle. Typically, an air dryer 26 needs less than a minute for regeneration.

Figure 2 depicts the duty cycle as a function of time t for each of the four compressed air generating units 12. Compressed air generating units 12 are identified by the reference sign A1, A2, B, C of their associated carriage. As one can see, controller 16 runs the compressed air generating units 12 in a time-staggered manner. More precisely, the duty cycles of compressed air generating units 12 are controlled such that compressed air generating units 12 regenerate their respective air dryer 26 at different points in time. Accordingly, while one compressed air generating unit 12 is in Mode 2 (air dryer regenerating mode), the other three compressed air generating units 12 are in Mode 1 (compressed air generating mode). In other words, the compressed air generating units 12 regenerate their air dryers 26 sequentially.

In an embodiment, all compressed air generating units 12 will not be operated at the maximum duty cycle during normal operation of the vehicle. In other words, during normal operation after a start up phase, the normal duty cycle is shorter than the maximum duty cycle of the respective compressed air generating units 12. At Figure 2 a start-up phase is shown, in which a total empty MRP has to be filled up. To save time at the first preparation of the total empty MRP, a longer duty cycle will be used, which is usually between the normal duty cycle and the maximum duty cycle.

As described here-above, in general, each compressed air generating unit 12 is in Mode 2 due to the need of regeneration of the air dyer. In a further embodiment, which may be combined with other embodiments disclosed herein, all compressed air generating units 12 connected to the MRP are stopped to feeding of the MRP, when a maximum MRP pressure (e.g. 10 bar) will be reached. Typically, the controller 16 stores the remaining time up to the next regeneration of each compressed air generating unit 12. Then, when a minimum MRP pressure is be reached (e.g. 8,5 bar), the compressed air generating units 12 are restarted and operated in Mode 1 according to the stored remaining time.

The present invention has in particular the following advantages:
- By running the compressed air generating units 12 in a time-staggered manner, the load on the railway vehicle's power supply can be distributed over time, and the inrush current for the power supply is reduced;
- Thanks to the redundancy obtained by the presence of one compressed air generating unit 12 per carriage, the reliability and availability of the compressed air is improved;
- A considerable noise reduction around the railway vehicle because the compressed air generating units 12 are smaller and distributed inside different carriages A1, A2, B, C; for example in case of a parked railway vehicle with activated pantograph, in particular if the parking is close to residents;
- Energy savings because the compressed air generating units 12 may be selectively turned on and off depending on the current need for compressed air;
- A better mass distribution on the railway vehicle since a single and heavy main compressor (typical mass: 400 to 550 kg) is replaced by several distributed compressed air generating units 12.
- In an embodiment, an auxiliary compressed air generating unit to lift the pantograph could be also used to feed the MRP what leads to a reduction of cost.

## Claims

1. A compressed air system (10) for a railway vehicle, comprising:
- a main reservoir pipe (MRP) adapted to supply compressed air to pneumatic equipment of the railway vehicle;
- a compressed air generating unit (12) fluidly connected to the main reservoir pipe; and
- a controller (16),
**characterised in that** the compressed air system comprises at least one additional compressed air generating unit (12) fluidly connected to the main reservoir pipe, wherein the controller (16) is adapted to control said compressed air generating units, wherein each compressed air generating unit (12) is adapted to supply compressed air to the main reservoir pipe (MRP).

2. The system of claim 1, wherein the controller (16) is adapted to run the compressed air generating units in a time-staggered manner.

3. The system of anyone of the previous claims, wherein each compressed air generating unit (12) includes an air dryer (26), preferably a single chamber air dryer.

4. The system of claim 3, wherein each compressed air generating unit (12) is adapted to operate in a compressed air generating mode and in an air dryer regenerating mode.

5. The system of claim 4, wherein the controller (16) is adapted to switch each compressed air generating unit (12) into the air dryer regenerating mode at a specific regenerating time such that the regenerating time of one compressed air generating unit is different from the regenerating time of at least one other compressed air generating unit.

6. The system of anyone of the previous claims, wherein one of the compressed air generating units (12) is adapted to supply compressed air to a pantograph of the railway vehicle for raising the same.

7. The system of anyone of the previous claims, wherein each compressed air generating unit (12) comprises a, preferably oil free, compressor (18), an electric motor (20) for driving the compressor, a one-way valve (22) for preventing compressed air from the main reservoir pipe from entering the compressor, and a compressed air reservoir (24) acting as a compressed air buffer between the compressor and the main reservoir pipe.

8. A railway vehicle comprising the compressed air system (10) of anyone of the previous claims.

9. The railway vehicle of claim 8, said railway vehicle comprising a plurality of carriages (A1, A2, B, C), each carriage being fitted with one of said compressed air generating units (12).

10. The railway vehicle of claim 9, wherein the compressed air generating units (12) are installed inside the carriages (A1, A2, B, C), preferably below the seating.

11. The railway vehicle of anyone of claims 8 to 10, further comprising a Train Control Monitoring System (TCMS), wherein said controller (16) is part of the TCMS.

12. A method of supplying compressed air to a main reservoir pipe (MRP) extending throughout a railway vehicle having at least two carriages (A1, A2, B, C), the method being **characterised by** a step of feeding compressed air into the main reservoir pipe (MRP) at each of said carriages.

13. The method of claim 12, wherein the feeding step comprises sucking ambient air from the carriage interiors, compressing the sucked air, and feeding the compressed air into the main reservoir pipe (MRP).

14. The method of claim 12 or 13, wherein the feeding of compressed air into the main reservoir pipe (MRP) at one carriage is started at a different time than the feeding of compressed air into the main reservoir pipe (MRP) at another carriage.
